# FASCICULE DE BREVET EUROPEEN

(11) **EP 0 658 695 B1**
(45) Date de publication et mention de la délivrance du brevet: **30.12.1998**
(21) Numéro de dépôt: 94402667.3
(22) Date de dépôt: 22.11.1994
(51) Int. Cl.: F16B 37/04

(54) **Elément d'attache en matière plastique insérable dans l'orifice d'un panneau ou analogue**
Befestigungselement aus Kunstoff zum Einstecken in einer Öffnung einer Platte oder dergleichen
Attaching element in plastic material for insertion into an aperture of a panel or the like

(30) Priorité: 15.12.1993 FR 9315123
(43) Date de publication de la demande: 21.06.1995
(73) Titulaire: RAPID S.A., F-75017 Paris (FR)
(72) Inventeur: Leon, Jean-Pierre, F-78000 Versailles (FR)
(74) Mandataire: Durand, Yves Armand Louis

(56) Documents cités:
- FR-A- 1 489 396
- FR-A- 2 054 128
- FR-A- 2 060 917
- FR-A- 2 090 519
- US-A- 4 461 593

## Description

La présente invention a essentiellement pour objet un élément d'attache en matière plastique insérable dans l'orifice d'un panneau ou d'une pièce quelconque conformément au préambule de la revendication 1 (FR-A-2 060 917).

Cet élément d'attache peut coopérer par exemple avec une vis pour réaliser un assemblage de panneaux ou analogues.

On a déjà proposé des éléments d'attache pouvant être montés dans un orifice ménagé dans un panneau dont une seule face est accessible.

De tels éléments d'attache comprennent généralement un fût et deux languettes élastiques et opposées prenant naissance sur le fût et dont les extrémités libres sont espacées du fût pour permettre la retenue de l'élément d'attache dans l'orifice du panneau, une fois cet élément y inséré.

Toutefois, lorsqu'on introduit le fût dans l'orifice du panneau, les languettes, en passant à force au travers de cet orifice, peuvent subir une déformation et rester le long du fût. Dès lors, l'extrémité libre des languettes ne peut pas prendre appui contre le dessous du panneau pour retenir l'élément d'attache. Autrement dit, ce dernier n'est pas correctement verrouillé sur le panneau et peut s'extraire facilement de l'orifice dans ce panneau.

La présente invention a pour but de remédier à cet inconvénient en proposant un élément d'attache dont les languettes de retenue sur le panneau joueront toujours et pleinement leur rôle après franchissement par l'élément d'attache du trou dans le panneau.

A cet effet, l'invention a pour objet un élément d'attache ayant les caractéristiques de la revendication 1.

Des modes particuliers de réalisation de l'invention sont indiqués dans les revendications dépendantes. Chaque lien, en position de repos et en vue de dessus présente une forme de V dont les deux branches sont respectivement reliées à la languette et au fût.

L'élément d'attache selon cette invention est encore caractérisé en ce que le fût comporte deux languettes opposées, chacune étant reliée au fût par deux liens précités.

Les deux liens appartenant à chaque languette et au fût sont situés dans un même plan horizontal ou dans un plan différent.

On observera encore que la face supérieure du fût comporte une multiplicité d'avant-trous ne débouchant que du côté de cette face supérieure.

Mais les caractéristiques et avantages de l'invention apparaîtront mieux dans la description détaillée qui suit et se réfère aux dessins annexés, donnés uniquement à titre d'exemple, et dans lesquels.

La figure 1 est une vue de côté et en élévation d'un élément d'attache en matière plastique selon cette invention.

La figure 2 est une vue en coupe suivant la ligne II-II de la figure 1.

La figure 3 est une autre vue de côté et en élévation de cet élément d'attache suivant la flèche III de la figure 1.

La figure 4 est une vue en plan et de dessus de l'élément d'attache suivant la flèche IV de la figure 3.

La figure 5 est une vue extérieure et de côté de l'attache, similaire à la figure 1 et montrant ladite attache en position montée sur un panneau à assembler avec un deuxième panneau, un arrachement ayant été pratiqué au niveau d'un avant-trou du fût de l'élément d'attache.

La figure 6 est une vue en plan et partielle du panneau muni d'un orifice pour recevoir l'élément d'attache.

Comme on le voit sur les dessins, un élément d'attache conforme à cette invention est réalisé en une seule pièce en matière plastique moulée et comprend essentiellement un fût 1 insérable dans l'orifice 2 d'un panneau P, par exemple, et muni en partie haute d'une face supérieure 3 d'appui sur le panneau P, comme on le voit bien sur la figure 5.

Le fût 1, suivant l'exemple de réalisation représenté, présente, en section transversale, sensiblement la forme d'un carré, dont deux côtés opposés sont respectivement munis d'une languette 4 faisant latéralement saillie du fût 1.

Plus précisément, chaque languette 4 comporte une extrémité inférieure 4a prenant naissance sur le fût 1 du côté de sa partie inférieure, et une extrémité supérieure ou libre 4b susceptible de prendre appui sur le dessous du panneau P, de sorte que lorsque le fût 1 est monté sur ledit panneau, il ne peut pas en être extrait, comme on le comprend aisément en se reportant encore une fois à la figure 5.

Toutefois, lors de l'insertion du fût 1 au travers de l'orifice 2, les languettes 4 sont comprimées en direction du fût et sont susceptibles de rester quelque peu dans cette position comprimée après franchissement de l'orifice 2, de sorte qu'elles ne peuvent pas alors jouer pleinement leur rôle de butée sur le dessous du panneau P.

Aussi, conformément à l'invention, chaque languette 4 est munie, de préférence à son extrémité libre 4b, de deux liens élastiquement déformables 5 reliant ladite extrémité libre 4b au fût 1.

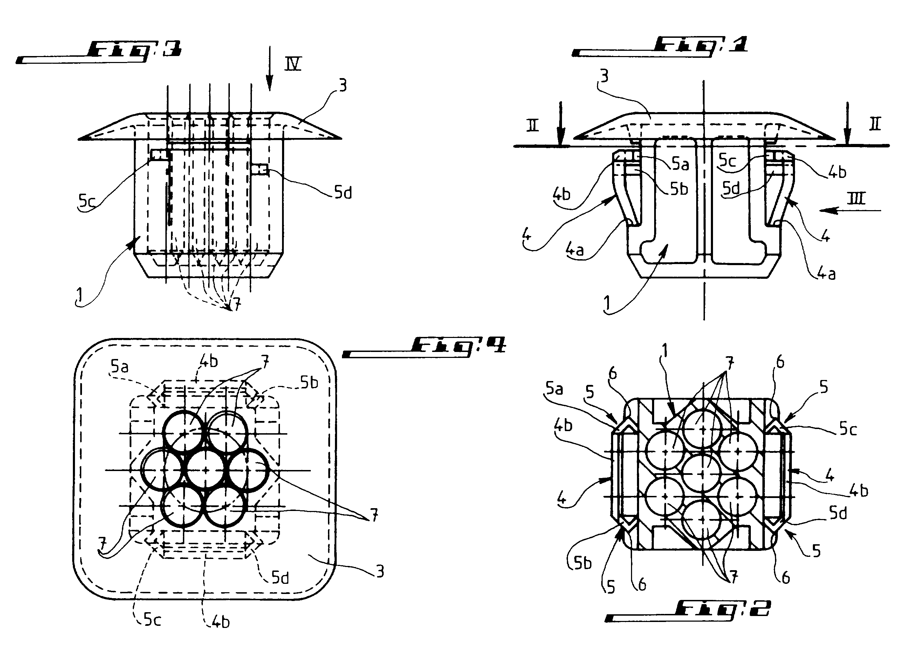

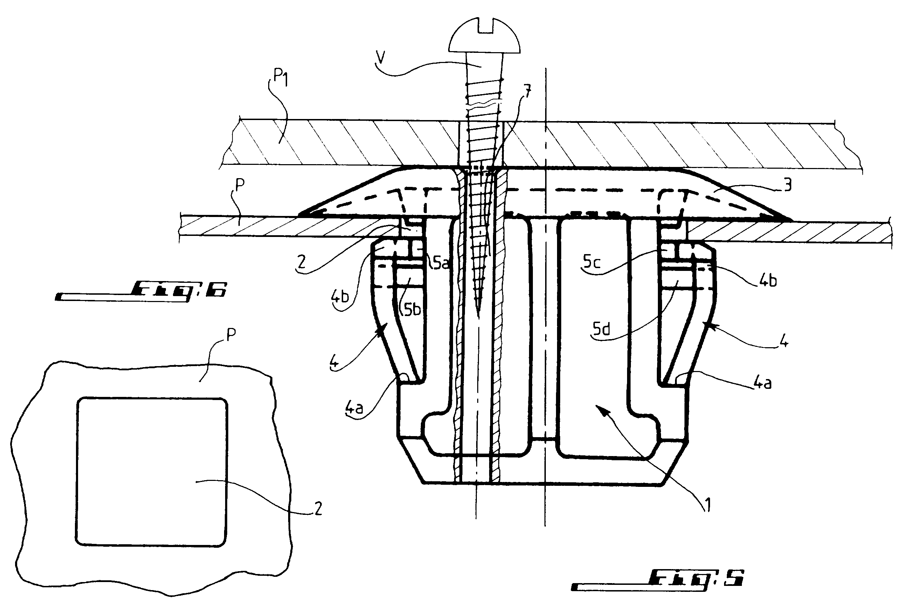

Plus précisément, comme on le voit bien sur les figures 1 et 2, l'extrémité libre 4b de l'une des languettes 4 est reliée au fût par deux liens élastiques 5a, 5b, tandis que l'extrémité libre 4b de l'autre languette 4 est reliée au fût 1 par deux liens élastiques 5c et 5d, chaque lien étant prévu de chaque côté de la languette.

En position de repos et en vue de dessus, comme on le voit bien sur la figure 2, notamment, chaque lien 5a, 5b, 5c et 5d présente une forme de V dont les deux branches sont respectivement reliées à la languette 4 et au fût 1 et dont la pointe 6 est dirigée vers l'extérieur de l'espace compris entre les languettes 4 et le fût 1.

Ainsi, la pointe 6 du V des liens élastiques 5 aura en quelque sorte une fonction de charnière sollicitant constamment les languettes 4 en position écartée du fût 1, comme on l'expliquera en détail plus loin à propos du fonctionnement.

Suivant l'exemple représenté, les deux liens élastiques 5 appartenant à l'extrémité libre 4b de chaque languette 4 sont situés dans un plan horizontal différent, essentiellement pour des raisons de moulage. Plus précisément, comme on le voit bien sur les figures 1 et 3, les liens 5a et 5b d'une languette sont décalés verticalement, de même que les liens 5c et 5d de l'autre languette. Mais, on pourrait parfaitement, sans sortir du cadre de l'invention, prévoir que les liens des deux languettes soient tous situés dans le même plan horizontal. Ou bien que les deux liens 5 d'une languette soient dans un même plan, et que les deux liens de l'autre languette soient aussi dans un même plan, mais décalés verticalement, par rapport au plan cité en premier lieu.

Comme on le voit bien sur les figures, le fût 1 comporte une multiplicité d'avant-trous 7 débouchant sur la face supérieure et d'appui 3, mais ne débouchant pas du côté de la partie inférieure du fût 1.

Ces avant-trous 7 permettent l'introduction d'une vis V dans le fût 1 sans tâtonnement, c'est-à-dire quelle que soit la position de la vis au droit de la face supérieure 3 appartenant audit fût.

Mais, pour une bonne compréhension de l'invention, on expliquera maintenant brièvement le rôle et les avantages des liens élastiquement déformables 5 entre les languettes 4 et le fût 1.

Lorsque le fût 1 est inséré au travers de l'orifice 2 du panneau P, les languettes 4 sont plus ou moins forcées contre les faces opposées du fût qui les portent, et cela en exerçant une contrainte sur les liens élastiques 5.

Dès lors, après que les extrémités libres 4b des languettes 4, et donc les liens élastiques 5, auront franchi l'orifice 2 du panneau P, lesdits liens élastiques vont se détendre et ainsi rappeler les languettes 4, en position écartée du fût 1. C'est dire que les extrémités libres 4b des languettes 4 joueront pleinement leur rôle de butée sur le dessous du panneau P pour empêcher l'extraction du fût 1 de l'orifice 2. Ensuite une pièce quelconque, telle qu'un autre panneau P₁ pourra être assemblée au panneau P au moyen de la vis V qui, pour son insertion dans le fût 1, tombera nécessairement dans l'un des avant-trous 7.

Bien entendu, l'invention n'est nullement limitée au mode de réalisation décrit et illustré qui n'a été donné qu'à titre d'exemple.

C'est ainsi que le nombre de liens élastiquement déformables entre les languettes et le fût 1 peut être quelconque, c'est-à-dire inférieur ou supérieur à deux. De même, la position relative des liens flexibles peut être quelconque, ainsi d'ailleurs que leur forme qui pourrait parfaitement, sans sortir du cadre de l'invention, être différente de celle d'un V, à la condition que cette forme agisse positivement sur les languettes pour les solliciter constamment en position écartée du fût.

L'invention comprend donc tous les équivalents techniques des moyens décrits ainsi que leurs combinaisons, si celles-ci sont effectuées suivant son esprit.

## Revendications

1. Elément d'attache en matière plastique susceptible de constituer par exemple un écrou et insérable dans l'orifice (2) d'un panneau ou analogue (P), du type comprenant un fût (1) et des languettes souples opposées (4) faisant saillie latéralement du fût (1) et retenant par leur extrémité libre (4b) le fût (1) sur le panneau (P) après insertion du fût dans l'orifice (2) du panneau, chaque languette (4) étant reliée par son extrémité libre (4b) au fût (1) par au moins un lien élastiquement déformable (5), caractérisé en ce que chaque lien (5a, 5b, 5c, 5d) s'étend suivant un plan perpendiculaire à l'axe longitudinal du fût, et présente en position de repos et en vue axiale une forme de V, dont les deux branches sont respectivement reliées à chaque côté de la languette (4) et au fût (1), et dont la pointe (6) est dirigée vers l'extérieur de l'espace compris entre les languettes (4) et le fût (1) pour former une charnière qui sollicite constamment les languettes (4) en position écartée du fût (1) et qui se détend après franchissement de l'orifice (2) du panneau (P).

2. Elément d'attache selon la revendication 1, caractérisé en ce que les deux liens (5a, 5b-5c, 5d) appartenant à chaque languette (4) et au fût (1) sont situés dans un même plan perpendiculaire à l'axe longitudinale du fût ou dans un plan perpendiculaire à l'axe longitudinale du fût différent.

3. Elément d'attache selon la revendication 1, caractérisé en ce que la face supérieure (3) du fût (1) comporte une multiplicité d'avant-trous (7) ne débouchant que du côté de cette face supérieure.

## Patentansprüche

1. Befestigungselement aus Kunststoff, das geeignet ist, z.B. eine Mutter zu Bilden und das in die Öffnung (2) einer Platte oder dergleichen (P) einsteckbar ist, derjenigen Gattung, mit einem Schaft (1) und von dem Schaft (1) seitwärts vorspringenden biegsamen entgegengesetzten Zungen (4), die mit ihrem freien Ende (4b) den Schaft (1) an der Platte (P) nach dem Einstecken des Schaftes in die Öffnung (2) der Platte zurückhalten, wobei jede Zunge (4) mit ihrem freien Ende (4b) durch wenigstens einen elastisch verformbaren Verbindungsteil (5) mit dem Schaft (1) verbunden ist, dadurch gekennzeichnet, daß jeder Verbindungsteil (5a, 5b, 5c, 5d) sich entlang einer senkrecht zur Längsachse des Schaftes verlaufenden Ebene erstreckt und in der Ruhestellung und in Axialansicht die Gestalt eines V's aufweist, dessen beide Schenkel jeweils mit jeder Seite der Zunge (4) und mit dem Schaft (1) verbunden sind und dessen Spitze (6) nach aussen des zwischen den Zungen (4) und dem Schaft (1) gelegenen Raumes gerichtet ist, um ein Scharnier zu bilden, das die Zungen (4) stets zu der von dem Schaft (1) entfernten Stellung hin beaufschlagt und das sich nach Durchgang der Öffnung (2) der Platte (P) entspannt.

2. Befestigungselement gemäß Anspruch 1, dadurch gekennzeichnet, daß die zu jeder Zunge (4) und zu dem Schaft (1) gehörenden beiden Verbindungsteile (5a, 5b-5c, 5d) in einer selben senkrecht zur Längsachse des Schaftes verlaufenden Ebene oder in einer senkrecht zur Längsache des Schaftes verlaufenden unterschiedlichen Ebene gelegen sind.

3. Befestigungselement nach Anspruch 1, dadurch gekennzeichnet, daß die obere Fläche (3) des Schaftes (1) eine Vielzahl von nur zu dieser oberen Fläche hin ausmündenden vorläufigen Löchern (7) aufweist.

## Claims

1. Attaching element of plastics material adapted for example to constitute a nut and insertable into the aperture (2) of a panel or the like (P), of the type comprising a shaft (1) and flexible opposite tongues (4) projecting sidewise from the shaft (1) and retaining with their free end (4b) the shaft (1) onto the panel (P) after insertion of the shaft into the aperture (2) of the panel, each tongue (4) being connected with its free end (4b) to the shaft (1) by at least one elastically deformable bond (5), characterized in that each bond (5a, 5b, 5c, 5d) extends along a plane perpendicular to the longitudinal axis of the shaft and exhibits in the rest position and in axial view a V-shape both legs of which are connected to each side of the tongue (4) and to the shaft (1), respectively and the tip (6) of which is directed outwards of the space comprised between the tongues (4) and the shaft (1) to form a hinge which constantly urges the tongues (4) into the position spaced from the shaft (1) and which expands after passing through the aperture (2) of the panel (P).

2. Attaching element according to claim 1, characterized in that the two bonds (5a, 5b-5c, 5d) belonging to each tongue (4) and to the shaft (1) are located in a same plane perpendicular to the longitudinal axis of the shaft or in a different plane perpendicular to the longitudinal axis of the shaft.

3. Attaching element according to claim 1, characterized in that the top face (3) of the shaft (1) comprises a multiplicity of preliminary holes (7) opening towards this top face only.
